# EUROPÄISCHE PATENTSCHRIFT

(11) **EP 1 264 759 B1**
(45) Veröffentlichungstag und Bekanntmachung des Hinweises auf die Patenterteilung: **26.02.2003**
(21) Anmeldenummer: 01119133.5
(22) Anmeldetag: 08.08.2001
(51) Int. Cl.: B62D 51/04

(54) **Deichselgelenktes Flurförderzeug**
Hand-guided fork lift truck
Chariot de manutention guidé par timon

(30) Priorität: 08.06.2001 DE 10127905
(43) Veröffentlichungstag der Anmeldung: 11.12.2002
(73) Patentinhaber: Still & Saxby S.à.r.l., 77107 Meaux-Cedex (FR)
(72) Erfinder: Fortin, Dominique, 60160 Montataire (FR)
(74) Vertreter: Lang, Michael (DE)

(56) Entgegenhaltungen:
- DE-A- 4 408 775
- DE-C- 19 612 603

## Beschreibung

Die Erfindung betrifft ein Flurförderzeug mit einer um eine horizontale Achse schwenkbaren Deichsel und einem Fahrantriebsmotor, der durch eine Bedienperson mittels eines Fahrantriebsschalters steuerbar ist, wobei die maximale Fahrgeschwindigkeit des Flurförderzeugs mittels einer elektrischen Steuereinheit in Abhängigkeit von dem Schwenkwinkel der Deichsel einstellbar ist.

Flurförderzeuge der genannten Art sind häufig als elektrisch angetriebene Niederhubwagen oder Hochhubwagen ausgeführt, die im Mitgängerbetrieb betrieben werden. Ein Antriebsrad des Flurförderzeugs ist dabei direkt oder indirekt mit der Deichsel verbunden, so dass das Flurförderzeug durch Drehen der Deichsel um eine vertikale Achse lenkbar ist.

Zum Betätigen der verschiedenen Funktionen des Flurförderzeugs, insbesondere des Fahrantriebs, wird die Deichsel, ausgehend von einer zumindest annähernd senkrechten Außerbetriebsstellung, nach unten geschwenkt.

Bei Flurförderzeugen des Standes der Technik sind die meist im Bereich eines Deichselkopfes angeordneten Fahrantriebsschalter in der Regel nur dann wirksam, wenn die Deichsel in einen Normalfahrabschnitt geschwenkt ist. Wenn sich die Deichsel oberhalb oder unterhalb dieses Normalfahrabschnitts in einem Bremsabschnitt befindet, kann der Fahrantriebsmotor nicht betrieben werden und das Flurförderzeug wird automatisch gebremst.

Beispielsweise aus der DE 44 08 775 C2 ist ein gattungsgemäßes Flurförderzeug bekannt, bei dem bei einer außerhalb des Normalfahrabschnitts befindlichen Deichsel der Fahrantriebsmotor ansteuerbar ist. Ein Betreiben des Fahrantriebsmotors ist hierbei auch bei annähernd senkrecht stehender Deichsel möglich, so dass sich die Bedienperson auch bei eingeschaltetem Fahrantriebsmotor in sehr geringem Abstand zu dem Flurförderzeug aufhalten kann. Um hierbei eine übermäßige Gefährdung für die Bedienperson zu vermeiden, wird für den Fahrbetrieb bei außerhalb des Normalfahrabschnitts befindlicher Deichsel automatisch die Höchstgeschwindigkeit des Flurförderzeugs verringert. Bei dem Gegenstand der DE 44 08 775 C2 erfolgt diese Verringerung der Höchstgeschwindigkeit automatisch, sobald die Deichsel über den Normalfahrabschnitt hinaus nach oben geschwenkt wird.

Bei dem Gegenstand der DE 196 12 603 C1 kann die Höchstgeschwindigkeit eines deichselgelenkten Flurförderzeugs durch Betätigen eines Sonderfahrschalters reduziert werden, wobei gleichzeitig ein Fahren innerhalb derjenigen Abschnitte des Schwenkbereichs der Deichsel ermöglicht wird, die bei nicht betätigtem Sonderfahrschalter die Bremsabschnitte bilden.

Bei den beiden oben beschriebenen Lösungen ist für die Höchstgeschwindigkeit des Flurförderzeugs ein Normalwert und ein reduzierter Wert vorgesehen. Bei einem Übergang von dem Normalwert auf den reduzierten Wert kann dies zu einem ruckartigen und dadurch unerwünschten Abbremsen des Flurförderzeugs führen. Analog hierzu ist bei dem Übergang von dem reduzierten Wert auf den Normalwert ein plötzliches Beschleunigen des Flurförderzeugs zu beobachten, was die Bedienperson des Flurförderzeugs überraschen kann und deshalb ein Gefährdungspotenzial darstellt.

Der Erfindung liegt daher die Aufgabe zugrunde, ein Flurförderzeug der eingangs genannten Art zur Verfügung zu stellen, bei dem ein ruckartiges Abbremsen oder Beschleunigen infolge einer Veränderung der maximalen Fahrgeschwindigkeit vermieden werden kann.

Diese Aufgabe wird erfindungsgemäß dadurch gelöst, dass die Steuereinheit derart ausgeführt ist, dass die maximale Fahrgeschwindigkeit des Flurförderzeugs eine Funktion des Schwenkwinkels der Deichsel ist, wobei mindestens ein Abschnitt des Schwenkbereichs der Deichsel mit variabler Höchstgeschwindigkeit vorgesehen ist, in dem sich die maximale Fahrgeschwindigkeit kontinuierlich mit dem Schwenkwinkel ändert. In dem genannten Abschnitt mit variabler Höchstgeschwindigkeit wird die Höchstgeschwindigkeit fortlaufend an den Schwenkwinkel der Deichsel angepasst. Je weiter die Deichsel nach oben geschwenkt wird, desto stärker wird die maximale Fahrgeschwindigkeit herabgesetzt. Die Veränderung der Höchstgeschwindigkeit erfolgt dabei kontinuierlich, derart, dass kein ruckartiges Beschleunigen oder Abbremsen des Flurförderzeugs ausgelöst wird. Die kontinuierliche Änderung der maximalen Fahrgeschwindigkeit kann dabei stufenlos oder in feiner Abstufung erfolgen.

Gemäß einer Ausgestaltung der Erfindung schließt der Abschnitt mit variabler Höchstgeschwindigkeit an ein oberes Ende des Schwenkbereichs der Deichsel an. Am oberen Ende dieses Abschnitts beträgt die Höchstgeschwindigkeit zumindest annähernd gleich Null und steigt während eines nach unten Schwenkens der Deichsel kontinuierlich an. Ein Fahrbetrieb ist dabei, wenn auch mit sehr geringer Geschwindigkeit, auch bei einer fast in senkrechter Endstellung befindlichen Deichsel möglich.

Ebenso ist es möglich, dass der Abschnitt mit variabler Höchstgeschwindigkeit nach oben an einen oberen Bremsabschnitt anschließt, wobei bei in dem oberen Bremsabschnitt befindlicher Deichsel eine Bremsvorrichtung des Flurförderzeugs automatisch betätigt ist. Zwischen dem Abschnitt mit variabler Höchstgeschwindigkeit und der vertikalen Endstellung der Deichsel befindet sich also ein oberer Bremsabschnitt, in dem kein Fahrbetrieb nicht möglich ist. Die Sicherheit des Flurförderzeugs kann dabei gegenüber der oben beschriebenen Ausgestaltung ohne oberen Bremsabschnitt weiter erhöht werden. Im Vergleich zu einem gattungsgemäßen Flurförderzeug des Standes der Technik kann der obere Bremsabschnitt jedoch kleiner ausgeführt werden, da der daran anschließende Abschnitt mit variabler Höchstgeschwindigkeit zusätzliche Sicherheitsreserven bietet.

Am anderen Ende des Schwenkbereichs der Deichsel, bei der die Deichsel zumindest annähernd waagrecht ist, schließt der Abschnitt mit variabler Höchstgeschwindigkeit gemäß einer ersten Ausführung an ein unteres Ende des Schwenkbereichs der Deichsel an.

Gemäß einer zweiten möglichen Ausführung schließt der Abschnitt mit variabler Höchstgeschwindigkeit nach unten an einen unteren Bremsabschnitt an, wobei bei in dem unteren Bremsabschnitt befindlicher Deichsel eine Bremsvorrichtung des Flurförderzeugs automatisch betätigt ist.

Weiterhin ist es möglich, dass der Abschnitt mit variabler Höchstgeschwindigkeit nach unten an einen Normalfahrabschnitt anschließt, wobei bei in dem Normalfahrabschnitt befindlicher Deichsel die maximale Fahrgeschwindigkeit auf einen konstanten Höchstwert eingestellt ist. In dem Normalfahrabschnitt steht somit grundsätzlich die bauartbedingt zulässigerweise erreichbare Höchstgeschwindigkeit zur Verfügung und wird auch durch Schwenken der Deichsel innerhalb des Normalfahrabschnitts nicht verändert.

In einer vorteilhaften Ausführung der Erfindung wird der Schwenkwinkel der Deichsel zumindest innerhalb des Abschnitts mit variabler Höchstgeschwindigkeit mittels mindestens eines kontinuierlichen oder inkrementalen Messwertgebers erfasst. Der Messwertgeber ist ausgangsseitig mit der elektrischen Steuereinheit des Flurförderzeugs verbunden, welche die dem aktuellen Deichselwinkel entsprechende Höchstgeschwindigkeit automatisch einstellt. Um ein redundantes Signal zu erlangen, können auch zwei voneinander unabhängige Messwertgeber, beispielsweise zwei Potentiometer oder ein Potentiometer und ein Inkrementalgeber, vorgesehen sein.

Eine besonders einfache und flexible Anordnung ergibt sich, wenn der Schwenkwinkel innerhalb des Normalfahrabschnitts mittels desselben kontinuierlichen oder inkrementalen Messwertgebers erfasst wird. Für den Abschnitt mit variabler Höchstgeschwindigkeit und den Normalfahrabschnitt wird somit derselbe Messwertgeber verwendet.

Ebenso vorteilhaft ist es, wenn der Schwenkwinkel innerhalb mindestens eines Bremsabschnitts mittels desselben kontinuierlichen oder inkrementalen Messwertgebers wie im Abschnitt mit variabler Höchstgeschwindigkeit und ggf. im Normalfahrabschnitt erfasst wird.

Besondere Vorteile ergeben sich, wenn die Aufteilung des Schwenkbereichs der Deichsel in den Abschnitt mit variabler Höchstgeschwindigkeit und mindestens einen weiteren Abschnitt mittels der Steuereinheit ausschließlich in Abhängigkeit von dem Signal des mindestens einen kontinuierlichen oder inkrementalen Messwertgebers erfolgt. Die Aufteilung des Schwenkbereichs der Deichsel in verschiedene Abschnitte erfolgt in der Steuereinheit durch entsprechende Softwareprogrammierung. Insbesondere sind dabei keinerlei zusätzliche Schaltelemente vorgesehen, die den Übergang zwischen zwei Abschnitten des Schwenkbereichs signalisieren. Die Lagen und Größen der verschiedenen Abschnitte des Schwenkbereichs können dadurch ohne Hardwareanpassung individuell an bestimmte Fahrzeugausrüstungen, Einsatzarten oder Kundenwünsche angepasst werden.

Die Sicherheit des Flurförderzeugs kann weiter verbessert werden, wenn vorzugsweise innerhalb des Abschnitts mit variabler Höchstgeschwindigkeit die maximale Fahrbeschleunigung in Abhängigkeit von dem Schwenkwinkel der Deichsel veränderbar ist. Die Fahrbeschleunigung kann beispielsweise für Deichselstellungen, in denen sich der Fahrer besonders nah am Flurförderzeug befindet, reduziert werden, um die Gefährdung durch Fehlbedienungen weiter zu verringern.

Weitere Vorteile und Einzelheiten der Erfindung werden anhand der in den schematischen Figuren dargestellten Ausführungsbeispiele näher erläutert. Dabei zeigt
- Figur 1: ein erfindungsgemäßes Flurförderzeug mit einem Abschnitt mit variabler Höchstgeschwindigkeit und einem Normalfahrabschnitt.
- Figur 2: ein erfindungsgemäßes Flurförderzeug mit einem großen Abschnitt mit variabler Höchstgeschwindigkeit ohne Normalfahrabschnitt.

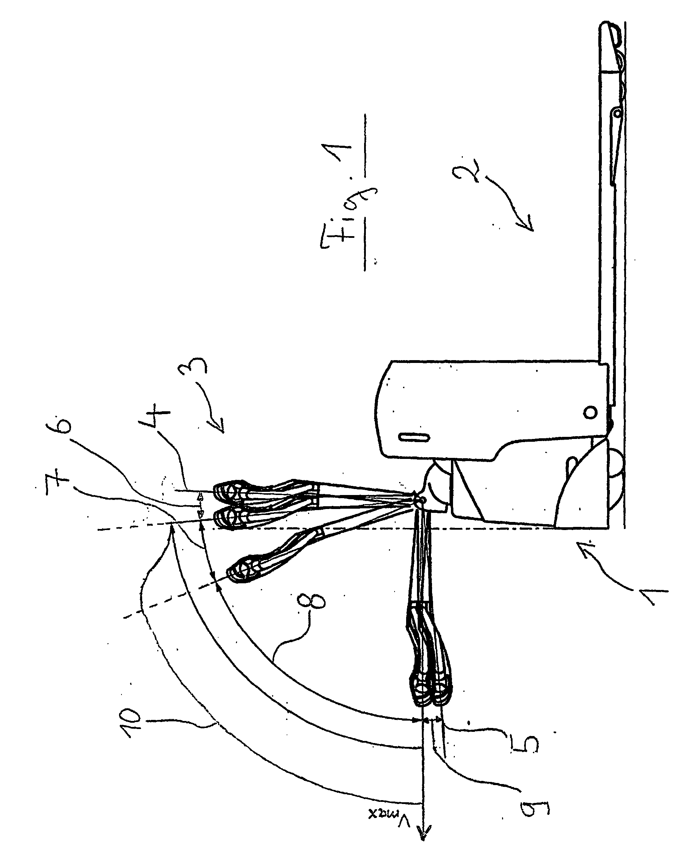

Figur 1 zeigt als erfindungsgemäßes Flurförderzeug einen Niederhubwagen mit einem Antriebsteil 1 und einem relativ zum Antriebsteil anhebbaren Lastteil 2. An dem Antriebsteil 1 ist eine Deichsel 3 angeordnet, die ausgehend von ihrer nahezu senkrechten Ruhestellung 4 von einer Bedienperson nach unten geschwenkt werden kann. In der unteren Endstellung 5 ist die Deichsel 3 annähernd waagrecht.

Der Schwenkbereich der Deichsel 3 ist bei der Ausführung gemäß Fig. 1 in folgende Abschnitte unterteilt: einen oberen Bremsabschnitt 6, einen Abschnitt 7 mit variabler Höchstgeschwindigkeit, einen Normalfahrabschnitt 8 und einen unteren Bremsabschnitt 9. Befindet sich die Deichsel in einem der beiden Bremsabschnitte 6 oder 9, so ist ein Fahrantrieb des Flurförderzeugs automatisch abgeschaltet und die Bremsen des Flurförderzeugs sind betätigt. Ein Fahrbetrieb ist mit dem Flurförderzeug in dem Abschnitt 7 und im Normalfahrabschnitt 8 möglich. Die maximal erreichbare Höchstgeschwindigkeit, die von einer Steuervorrichtung des Flurförderzeugs in Abhängigkeit von der Deichselstellung eingestellt wird, ist als Kurve 10 über dem Deichselwinkel dargestellt. Erfindungsgemäß wird in dem Abschnitt 6 die Höchstgeschwindigkeit als Funktion des Deichselwinkels eingestellt. Hierbei steigt die Höchstgeschwindigkeit während des nach unten Schwenkens der Deichsel 3 stufenlos von Null auf die für den Normalfahrbereich 10 vorgesehene Höchstgeschwindigkeit an.

Für den Normalfahrbereich ist eine konstante Höchstgeschwindigkeit eingestellt. Für die Abgrenzung des Abschnitts 7 von dem Normalfahrabschnitt sind keinerlei mechanische Schaltelemente erforderlich. Vielmehr kann diese Abgrenzung alleine durch Auswertung des stufenlos gemessenen Deichselwinkels in der elektrischen Steuereinheit erfolgen.

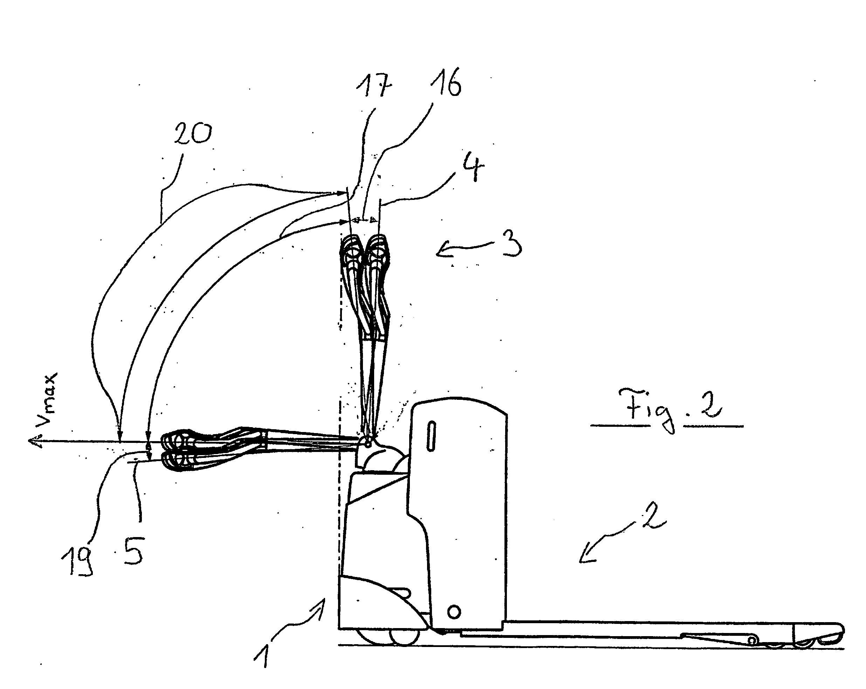

Bei der Ausführung der Erfindung gemäß Figur 2 ist anstelle des Normalfahrabschnitts, in dem sich die Deichsel 3 während des normalen Fahrbetriebs in der Regel befindet, in einen großen Abschnitt 17 mit variabler Höchstgeschwindigkeit vorgesehen. An diesen Abschnitt 17 schließt sich nach oben ein oberer Bremsabschnitt und nach unten ein unterer Bremsabschnitt 19 an. Der Verlauf der Höchstgeschwindigkeit ist über dem Deichselwinkel mit der Kurve 20 aufgetragen. Die erfindungsgemäße Anordnung ermöglicht eine freie Programmierung der Höchstgeschwindigkeit in Abhängigkeit vom Deichselwinkel. Der Verlauf der Höchstgeschwindigkeit kann somit an spezielle Einsatzfälle, Kundenwünsche oder länderspezifische Sicherheitsnormen in einfacher Weise angepasst werden.

## Patentansprüche

1. Flurförderzeug mit einer um eine horizontale Achse schwenkbaren Deichsel (3) und einem Fahrantriebsmotor, der durch eine Bedienperson mittels eines Fahrantriebsschalters steuerbar ist, wobei die maximale Fahrgeschwindigkeit des Flurförderzeugs mittels einer elektrischen Steuereinheit in Abhängigkeit von dem Schwenkwinkel der Deichsel (3) einstellbar ist, **dadurch gekennzeichnet, dass** die Steuereinheit derart ausgeführt ist, dass die maximale Fahrgeschwindigkeit des Flurförderzeugs eine Funktion des Schwenkwinkels der Deichsel (3) ist, wobei mindestens ein Abschnitt (7) des Schwenkbereichs der Deichsel (3) mit variabler Höchstgeschwindigkeit vorgesehen ist, in dem sich die maximale Fahrgeschwindigkeit kontinuierlich mit dem Schwenkwinkel ändert.

2. Flurförderzeug nach Anspruch 1, **dadurch gekennzeichnet, dass** der Abschnitt (7) mit variabler Höchstgeschwindigkeit an ein oberes Ende des Schwenkbereichs der Deichsel (3) anschließt.

3. Flurförderzeug nach Anspruch 1, **dadurch gekennzeichnet, dass** der Abschnitt (7) mit variabler Höchstgeschwindigkeit nach oben an einen oberen Bremsabschnitt (6) anschließt, wobei bei in dem oberen Bremsabschnitt (6) befindlicher Deichsel (3) eine Bremsvorrichtung des Flurförderzeugs automatisch betätigt ist.

4. Flurförderzeug nach einem der Ansprüche 1 bis 3, **dadurch gekennzeichnet, dass** der Abschnitt (7) mit variabler Höchstgeschwindigkeit an ein unteres Ende des Schwenkbereichs der Deichsel (3) anschließt.

5. Flurförderzeug nach einem der Ansprüche 1 bis 3, **dadurch gekennzeichnet, dass** der Abschnitt (7) mit variabler Höchstgeschwindigkeit nach unten an einen unteren Bremsabschnitt (9) anschließt, wobei bei in dem unteren Bremsabschnitt (9) befindlicher Deichsel (3) eine Bremsvorrichtung des Flurförderzeugs automatisch betätigt ist.

6. Flurförderzeug nach einem der Ansprüche 1 bis 3, **dadurch gekennzeichnet, dass** der Abschnitt (7) mit variabler Höchstgeschwindigkeit nach unten an einen Normalfahrabschnitt (8) anschließt, wobei bei in dem Normalfahrabschnitt (8) befindlicher Deichsel (3) die maximale Fahrgeschwindigkeit auf einen konstanten Höchstwert eingestellt ist.

7. Flurförderzeug nach einem der Ansprüche 1 bis 6, **dadurch gekennzeichnet, dass** der Schwenkwinkel der Deichsel (3) zumindest innerhalb des Abschnitts (7) mit variabler Höchstgeschwindigkeit mittels mindestens eines kontinuierlichen oder inkrementalen Messwertgebers erfasst wird.

8. Flurförderzeug nach Anspruch 7, **dadurch gekennzeichnet, dass** der Schwenkwinkel innerhalb des Normalfahrabschnitts (8) mittels desselben kontinuierlichen oder inkrementalen Messwertgebers erfasst wird.

9. Flurförderzeug nach Anspruch 7 oder 8, **dadurch gekennzeichnet, dass** der Schwenkwinkel innerhalb mindestens eines Bremsabschnitts (6, 9) mittels desselben kontinuierlichen oder inkrementalen Messwertgebers erfasst wird.

10. Flurförderzeug nach einem der Ansprüche 7 bis 9, **dadurch gekennzeichnet, dass** die Aufteilung des Schwenkbereichs der Deichsel (3) in den Abschnitt (7) mit variabler Höchstgeschwindigkeit und mindestens einen weiteren Abschnitt mittels der Steuereinheit ausschließlich in Abhängigkeit von dem Signal des mindestens einen kontinuierlichen oder inkrementalen Messwertgebers erfolgt.

11. Flurförderzeug nach einem der Ansprüche 7 bis 10, **dadurch gekennzeichnet, dass** vorzugsweise innerhalb des Abschnitts (8) mit variabler Höchstgeschwindigkeit die maximale Fahrbeschleunigung in Abhängigkeit von dem Schwenkwinkel der Deichsel (3) veränderbar ist.

## Claims

1. Industrial truck having a tiller (3) which can be pivoted about a horizontal axis and a traction drive motor, which can be controlled by an operator by means of a traction drive switch, the maximum travel speed of the industrial truck being adjustable by means of an electrical control unit as a function of the pivoting angle of the tiller (3), **characterized in that** the control unit is designed in such a way that the maximum travel speed of the industrial truck is a function of the pivoting angle of the tiller (3), at least one section (7) of the pivoting range of the tiller (3) being provided with a variable maximum speed, in which section the maximum travel speed changes continuously with the pivoting angle.

2. Industrial truck according to Claim 1, **characterized in that** the section (7) with variable maximum speed adjoins an upper end of the pivoting range of the tiller (3).

3. Industrial truck according to Claim 1, **characterized in that** the section (7) with variable maximum speed adjoins an upper braking section (6) at the top, a braking device of the industrial truck being actuated automatically when the tiller (3) is in the upper braking section (6).

4. Industrial truck according to one of Claims 1 to 3, **characterized in that** the section (7) with variable maximum speed adjoins a lower end of the pivoting range of the tiller (3).

5. Industrial truck according to one of Claims 1 to 3, **characterized in that** the section (7) with variable maximum speed adjoins a lower braking section (9) at the bottom, a braking device of the industrial truck being actuated automatically when the tiller (3) is located in the lower braking section (9).

6. Industrial truck according to Claims 1 to 3, **characterized in that** the section (7) with variable maximum speed adjoins a normal travel section (8) at the bottom, the maximum travel speed being adjusted to a constant maximum value when the tiller (3) is located in the normal travel section (8).

7. Industrial truck according to Claims 1 to 6, **characterized in that** the pivoting angle of the tiller (3), at least within the section (7) with variable maximum speed, is registered by means of at least one continuous or incremental measured value transmitter.

8. Industrial truck according to Claim 7, **characterized in that** the pivoting angle within the normal travel section (8) is registered by means of the same continuous or incremental measured value transmitter.

9. Industrial truck according to Claim 7 or 8, **characterized in that** the pivoting angle within at least one braking section (6, 9) is registered by means of the same continuous or incremental measured value transmitter.

10. Industrial truck according to one of Claims 7 to 9, **characterized in that** the subdivision of the pivoting range of the tiller (3) into the section (7) with variable maximum speed and at least one further section is carried out by means of the control unit exclusively on the basis of the signal from the at least one continuous or incremental measured value transmitter.

11. Industrial truck according to one of Claims 7 to 10, **characterized in that**, preferably within the section (7) with variable maximum speed, the maximum travel acceleration can be varied on the basis of the pivoting angle of the tiller (3).

## Revendications

1. Chariot de manutention équipé d'un timon (3) pivotant autour d'un axe horizontal et d'un moteur d'entraînement qui peut être commandé par un opérateur au moyen d'un commutateur d'entraînement, la vitesse de déplacement maximale du chariot de manutention pouvant être réglée à l'aide d'un module de commande électrique en fonction de l'angle de pivotement du timon (3), **caractérisé en ce que** le module de commandé est réalisé de telle manière que la vitesse de déplacement maximale du chariot de manutention est une fonction de l'angle de pivotement du timon (3), au moins une portion (7) à vitesse maximale variable étant prévue dans la plage de pivotement du timon (3), portion dans laquelle la vitesse de déplacement maximale varie continuellement en fonction de l'angle de pivotement.

2. Chariot de manutention selon la revendication 1, **caractérisé en ce que** la portion (7) à vitesse maximale variable est juxtaposée à une extrémité supérieure de la plage de pivotement du timon (3).

3. Chariot de manutention selon la revendication 1, **caractérisé en ce que** la portion (7) à vitesse maximale variable est juxtaposée vers le haut à une portion supérieure de freinage (6), un dispositif de freinage du chariot de manutention étant actionné automatiquement lorsque le timon (3) se trouve dans la portion supérieure de freinage (6).

4. Chariot de manutention selon l'une des revendications 1 à 3, **caractérisé en ce que** la portion (7) à vitesse maximale variable est juxtaposée à une extrémité inférieure de la plage de pivotement du timon (3).

5. Chariot de manutention selon l'une des revendications 1 à 3, **caractérisé en ce que** la portion (7) à vitesse maximale variable est juxtaposée vers le bas à une portion inférieure de freinage (9), un dispositif de freinage du chariot de manutention étant actionné automatiquement lorsque le timon (3) se trouve dans la portion inférieure de freinage (9).

6. Chariot de manutention selon l'une des revendications 1 à 3, **caractérisé en ce que** la portion (7) à vitesse maximale variable est juxtaposée vers le bas à une portion de déplacement normal (8), la vitesse de déplacement maximale étant réglée à une valeur maximale constante lorsque le timon (3) se trouve dans la portion de déplacement normal (8).

7. Chariot de manutention selon l'une des revendications 1 à 6, **caractérisé en ce que** l'angle de pivotement du timon (3) est détecté au moins à l'intérieur de la portion (7) à vitesse maximale variable à l'aide d'au moins un capteur de mesure continu ou incrémental.

8. Chariot de manutention selon la revendication 7, **caractérisé en ce que** l'angle de pivotement à l'intérieur de la portion de déplacement normal (8) est détecté à l'aide du même capteur de mesure continu ou incrémental.

9. Chariot de manutention selon la revendication 7 ou 8, **caractérisé en ce que** l'angle de pivotement à l'intérieur d'au moins une portion de freinage (6, 9) est détecté à l'aide du même capteur de mesure continu ou incrémental.

10. Chariot de manutention selon l'une des revendications 7 à 9, **caractérisé en ce que** la division de la plage de pivotement du timon (3) en la portion (7) à vitesse maximale variable et en au moins une portion supplémentaire est réalisée par le module de commande exclusivement en fonction du signal de l'au moins un capteur de mesure continu ou incrémental.

11. Chariot de manutention selon l'une des revendications 7 à 10, **caractérisé en ce que** l'accélération de déplacement maximale peut varier en fonction de l'angle de pivotement du timon (3) de préférence dans la portion (7) à vitesse maximale variable.
